# EUROPÄISCHE PATENTANMELDUNG

(11) **EP 1 416 746 A1**
(43) Veröffentlichungstag der Anmeldung: **06.05.2004**
(21) Anmeldenummer: 02024249.1
(22) Anmeldetag: 31.10.2002
(51) Int. Cl.: H04Q 7/24

(54) **Verfahren zur Mobilfunkübertragung**

(71) Anmelder: SIEMENS AKTIENGESELLSCHAFT, 80333 München (DE)
(72) Erfinder: Belling, Thomas, Dr., 81477 München (DE); Braml, Rainer, 85356 Freising (DE); Pfeil, Bernhard, 81669 München (DE)

(57) **Zusammenfassung**

Verfahren zur Nutzdatenübertragung, insbesondere Sprachübertragung, zwischen mindestens zwei Mobilfunknetzen oder zwei Bereichen eines Mobilfunknetzes vom 3GPP-Typ, insbesondere UMTS-Typ, wobei im Mobilvermittlungsnetz das Iu Framing Protokoll genutzt wird und ein erstes Netz oder ein erster Bereich optimierte Sprachcodecs und Codecverhandlung zum Beispiel im Rahmen des BICC-Signalisierungsprotokolls nützt, und ein zweites Netz oder ein zweiter Bereich des ISUP-Signalisierungsprotokoll nutzt, wobei im Rahmen der ISUP-Signalisierung eine Verhandlung der netz- bzw. bereichsübergreifenden Unterstützung des Iu Framing Protokoll bzw. der Art der Sprachkodierung durchgeführt wird.

## Beschreibung

Die Erfindung betrifft ein Verfahren zur Nutzdatenübertragung zwischen Mobilfunknetzen oder Bereichen eines Mobilfunknetzes vom 3GPP-Typ mit unterschiedlichen Signalisierungsprotokollen nach dem Oberbegriff des Anspruchs 1.

In einem 3GPP (3rd Generation Partnership Protocol)-Mobilfunknetz wird im sogenannten "Core-Netz" (Mobilvermittlungsnetz) derzeit das Iu Framing Protokoll verwendet. Sprachdaten werden in der Regel in für mobile Applikationen optimierter, komprimierter Kodierung, beispielsweise mit dem AMR Codec, übertragen.

Mobilfunknetze werden untereinander meist durch ein öffentliches Telefonnetz (PSTN) verbunden. Das PSTN nützt in der Regel ISUP (ITU-T Q.761 - Q.764) als Signalisierungsprotokoll sowie die TDM Technologie zum Transport der Nutzinformation. Sprache wird mit PCM Codierung (ITU-T G.711) im ISUP-PSTN übertragen.

Daher ist beim Übergang zwischen Mobilfunknetz und PSTN sowohl eine Terminierung des Iu Framing Protokolls wie auch für Sprache eine Umkodierung erforderlich. Dazu wird Rechenleistung sowie in der Regel dedizierte Hardware benötigt. Bei einer Verbindung zweier 3GPP Mobilfunknetze über ein ISUP-PSTN ist diese Behandlung an beiden Netzwerkgrenzen zwischen Mobilfunknetz und PSTN erforderlich. Für Sprache wird also zweimal die Kodierung (unter Beeinträchtigung der Sprachqualität) umgesetzt, obwohl vielfach in beiden Mobilfunknetzen derselbe Codec verwendet werden könnte.

In 3GPP Mobilfunknetzen kommt BICC (ITU-T Q.1902.4) zum Einsatz, das eine Verhandlung des verwendeten Codecs erlaubt.

Dagegen ist bisher eine solche Codecverhandlung in ISUP nicht vorhanden.

Im Core-Netz des 3GPP Mobilfunknetzes kann neben BICC auch ISUP zum Einsatz kommen. Bereiche mit BICC und ISUP können in einem Netz nebeneinander existieren. Dadurch kann es zu vergleichbaren Szenarien kommen wie oben beschrieben: Wiederum können zwei BICC-Netzbereiche durch einen ISUP-Netzbereich verbunden sein. Die oben beschriebenen Nachteile einer solchen Konfiguration treffen wiederum zu.

Im Falle eines ISUP-basierten Core-Netzes eines 3GPP Mobilfunknetzes treten ebenfalls vergleichbare Szenarien bei sogenannten "Mobile-to-Mobile Calls" innerhalb des Netzes auf. Hier werden an der Verbindung zum sogenannten Radio-Access-Netz (Zugangsnetz), dem sogenannten "Iu-Cs Interface", ebenfalls optimierte Codecs, das Iu Framing Protokoll, sowie eine Verhandlung der Codierung verwendet. Vergleichbare Szenarien treten auch auf, wenn zwei ISUP-basierte 3GPP Mobilfunknetze verbunden sind, sowie wenn eine BICC basiertes und ein ISUP basiertes 3GPP Mobilfunknetz miteinander verbunden sind.

Für manche der genannten Szenarien kommt die sogenannte "Tandem Free Operation" zum Einsatz. Jedoch ist zum Umsetzen zwischen "Tandem Free Operation" in ISUP Netzen und "Transcoder Free Operation" in BICC Netzen dedizierte Hardware erforderlich. Solche Hardware ist für "Tandem Free Operation" ebenfalls am Rande des Core-Netzes zum Iu Interface hin erforderlich.

Es wäre wünschenswert, zwei 3GPP Mobilfunknetze über ein ISUP-PSTN so zu verbinden, dass eine Umsetzung der Kodierung von Sprache vermieden werden kann, und auch das Iu Framing Protokoll durchgehend verwendet wird. Das heißt, die sogenannte "Transcoder Free Operation" (3GPP TS 23.153) könnte durchgehend eingesetzt werden. Dadurch würde einerseits. Rechenaufwand und damit verbunden wahrscheinlich auch Hardware eingespart, und andererseits die Sprachqualität verbessert. Die Verbindung der Mobilfunknetze sollte so realisiert werden, dass dazu keine Veränderung aller Vermittlungseinrichtungen in den ISUP PSTN erforderlich ist.

Der Erfindung liegt daher die Aufgabe der Bereitstellung eines zur Realisierung dieser Zielstellung geeigneten Verfahrens zugrunde.

Diese Aufgabe wird durch ein Verfahren mit den Merkmalen des Anspruchs 1 gelöst. Zweckmäßige Fortbildungen des Erfindungsgedankens sind Gegenstand der abhängigen Ansprüche.

Das beschriebene Verfahren ermöglicht es, zwei 3GPP Mobilfunknetze oder Bereiche in 3GPP Mobilfunknetzen über ein ISUP Netz so zu verbinden, dass eine Umsetzung der Kodierung von Sprache vermieden werden kann, und auch das Iu Framing Protokoll durchgehend verwendet werden kann, Das heißt, die sogenannte "Transcoder Free Operation" (3GPP TS 23.153) kann durchgehend eingesetzt werden. Dadurch wird einer einerseits Rechenaufwand und damit verbunden wahrscheinlich auch Hardware eingespart und andererseits die Sprachqualität verbessert. Das erfindungsgemäße Verfahren führt eine Verhandlung der Verwendung des Iu Framing Protokolls sowie der verwendeten Sprachkodierung in der Signalisierung in ISUP Netzen ein. Eine solche Verhandlung gibt es in ISUP bisher nicht. Die Verhandlung wird so realisiert, dass dazu keine Veränderung der die Verhandlung nur weiterreichenden Vermittlungseinrichtungen in den ISUP PSTN bzw. ISUP-Mobilfunknetzen oder ISUP-Bereichen in Netzen erforderlich ist.

Es werden in der ISUP Signalisierung neue Parameter eingeführt, die es ermöglichen, zwischen den Vermittlungseinrichtungen am Rande des ISUP-Netzbereiches auszuhandeln, ob eine durchgehende Verwendung des Iu Framing Protokolls möglich ist, und die es gegebenenfalls ermöglichen, die Kodierung von Sprache auszuhandeln.

Zur Verhandlung der Unterstützung des Iu Framing Protokolls wird von dem die Verhandlung auslösenden Knoten (dem sogenannten "Originating node") ein Parameter geschickt, der ausdrückt, dass die Nutzung des Iu Framing Protokolls gewünscht wird. Dieser Parameter soll im weiteren "Iu Framing unterstützt" genannt werden. Der ISUP Knoten, der die Verhandlung beantwortet (der sogenannte "terminating node", beispielsweise am Rande eines BICC Mobilfunknetzes), soll nur im Falle einer Unterstützung des lu Framing Protokolls sowie der hier beschriebenen Verhandlung in einer rückwärtigen Nachricht einen Parameter einfügen, der ausdrückt, dass das Iu Framing Protokoll ausgewählt ist. Dieser Parameter soll im Folgenden "Iu Framing gewählt" genannt werden.

Der "originating node" soll bei Erhalt einer Antwort-Nachricht, die den "Iu Framing gewählt" Parameter enthält, das Iu UP Framing Protokoll durch das ISUP-Netz hindurch verwenden und in Richtung des ISUP Netzes die Initialisierung des Iu Framing Protokolls anstoßen.

Der "Originating node" soll bei Erhalt einer Antwortnachricht, die den "Iu Framing gewählt" Parameter nicht enthält, das Iu UP framing Protokoll durch das ISUP Netz hindurch nicht verwenden, und im Falle einer Sprachverbindung transkodieren.

Zusätzlich wird im Falle von Sprache zusammen mit dem Parameter "Iu Framing unterstützt" vom "originating node" ein Parameter mit Informationen über mögliche oder gewünschte Sprachkodierungen geschickt. Dieses Parameter soll im Weiteren "zulässige Sprachkodierungen für Iu FP" genannt werden.

Der "terminating node" soll im Falle einer Unterstützung des Iu Framing Protokolls sowie der hier beschrieben Verhandlung aus dem in dem Parameter "zulässige Sprachkodierungen für Iu FP" aufgeführten Sprachkodierungen eine Kodierung auswählen.

Diese Kodierung soll er in einer Antwortnachricht in einem neuen Parameter an den "originating node" übermitteln. Dieser Parameter wird im Weiteren "gewählte Sprachkodierung für Iu FP" genannt.

Zusätzlich kann der "terminating node" auch Informationen über weitere verwendbare Sprachkodierungen aus der Menge der vorgeschlagenen Codierungen im Parameter "zulässige Sprachkodierungen für Iu FP" auswählen und in einem weiteren Parameter zum "originating node" signalisieren. Dieser Parameter soll im Weiteren "verfügbare Sprachkodierungen für Iu FP" genannt werden.

Bei der Ermittlung der Kodierungen in den Parametern "gewählte Sprachkodierung für Iu FP" und "verfügbare Sprachkodierungen für Iu FP" kann der "terminating node" eine Codecverhandlung auf der nicht-ISUP Seite verwenden.

Falls der Terminating Node die Parameter "Iu Framing unterstützt" und "zulässige Sprachkodierungen für Iu FP" nicht unterstützt, soll er diese Parameter in eingehenden Nachrichten verwerfen, den Verbindungsaufbau jedoch fortführen. Dieses Verhalten wird durch ein geeignetes Setzen der mit den neuen Parametern verbundenen Kompatibilitätsinformation In der ISUP Signalisierung ermöglicht.

Um es zu ermöglichen, die Änderungen nur an den Knoten am Rande des ISUP-Netzes zu implementieren, sollen die neue eingeführten Parameter von Knoten innerhalb des ISUP Netzes transparent durchgereicht werden. Dieses Verhalten wird durch ein geeignetes Setzen der mit den neuen Parametern verbundenen Kompatibilitätsinformation in der ISUP Signalisierung ermöglicht.

Die Parameter "Iu Framing unterstützt" und "zulässige Sprachkodierungen für Iu FP" sollen in der ISUP "IAM" Nachricht transportiert werden.

Die Parameter "Iu Framing gewählt", "gewählte Sprachkodierung für Iu FP" und "verfügbare Sprachkodierungen für Iu FP" sollen in der ISUP "ACM" Nachricht transportiert werden.

Im Falle der Unterstützung des Iu Framing Protokolls ist es erforderlich, dass der Transport im ISUP Netz mittels einer sogenannten "64 kbit/s unrestricted digital" Transportverbindung erfolgt. Falls das Iu Framing Protokoll nicht unterstützt wird, ist dies nicht nötig und eine geringere Anforderung an die Tranaportverbindung ist möglich, z.B. "speech, 3.1 kHz". Um diesen unterschiedlichen Anforderungen Rechnung zu tragen, kann das beschriebene Verfahren mit der sogenannten ISUP UDI Fallback Prozedur verbunden werden.

Die Verwendung ISUP UDI Fallback Prozedur erlaubt zudem einen Verbindungsaufbau, allerdings ohne Iu Framing Protokoll und optimierte Sprache, auch dann fortzuführen, wenn im ISUP Netz keine digitalen Leitungen zur Verfügung stehen. Bei der Fallback Prozedur ist die Anforderung an das Transportsystem "64kBit/s preferred" ("TMR"). Begleitend wird als Rückfall-Möglichkeit die geringere Anforderung "speech" oder "3.1 kHz" mitsignalisiert ("TMR Prime"). Kann keine digitale Leitung belegt werden, so wird die Verbindung mit der Rückfall-Möglichkeit aufgebaut und dies auch zurücksignalisiert ("TMR Used").

Falls bei der Verwendung der ISUP UDI Fallback Prozedur "TMR Used" mit dem Wert "speech" an den "originating node" signalisiert wird, soll der originating Node das Iu Framing Protokoll und optimierte Sprache auch dann nicht verwenden, wenn in der Nachricht die Parameter "Iu Framing gewählt", "gewählte Sprachkodierung für Iu FP" und "verfügbare Sprachkodierungen für Iu FP" enthalten sind.

Falls bei der Verwendung der ISUP UDI Fallback Prozedur "TMR" mit dem Wert "speech" an den "terminating node" signalisiert wird, soll der "terminating Node" das Iu Framing Protokoll und optimierte Sprache auch dann nicht verwenden, wenn in der Nachricht die Parameter "Iu Framing unterstützt" und "zulässige Sprachkodierungen für Iu FP" enthalten sind.

Die beschriebenen Verfahren können unter anderem in folgenden Szenarien verwendet werden (Es sind die Netze oder Netzbereiche angegeben, die eine Nutzverbindung in dieser oder entgegengesetzter Reihenfolge durchquert):
- 3GPP BICC Mobilfunknetz - ISUP PSTN - 3GPP BICC Mobilfunknetz
- 3GPP BICC Mobilfunknetz - ISUP PSTN - 3GPP ISUP Mobilfunknetz
- 3GPP ISUP Mobilfunknetz - ISUP PSTN - 3GPP ISUP Mobilfunknetz
- 3GPP ISUP Mobilfunknetz - 3GPP BICC Mobilfunknetz
- 3GPP ISUP Mobilfunknetz - 3GPP ISUP Mobilfunknetz
- ISUP Bereich in 3GPP Mobilfunknetz - BICC Bereich 3GPP Mobilfunknetz
- BICC Bereich 3GPP Mobilfunknetz -ISUP Bereich in 3GPP Mobilfunknetz - BICC Bereich 3GPP Mobilfunknetz
- 3GPP ISUP Mobilfunknetz.

Zur weiteren Verdeutlichung einer bevorzugten Ausführungsform des erfindungsgemäßen Verfahrens dienen die beigefügten Figuren, die aufgrund ihrer Beschriftung im wesentlichen selbsterklärend sind und dazu hier keiner genaueren Erläuterung bedürfen. Hierbei zeigt Fig. 1 den Fall, dass der beantwortende Netzknoten das Iu Framing Protokoll und die Verhandlung über Protokoll und Art der Sprachkodierung unterstützt, Fig. 2 den Fall, dass der beantwortende Netzknoten die Verhandlung über das Iu Framing Protokoll und die Art der Sprachkodierung nicht unterstützt, und Fig. 3 den Fall, dass der zwischen auslösendem und beantwortendem Netzknoten angeordnete ISUP Knoten keine digitale Verbindung zum beantwortenden Netzknoten hat.

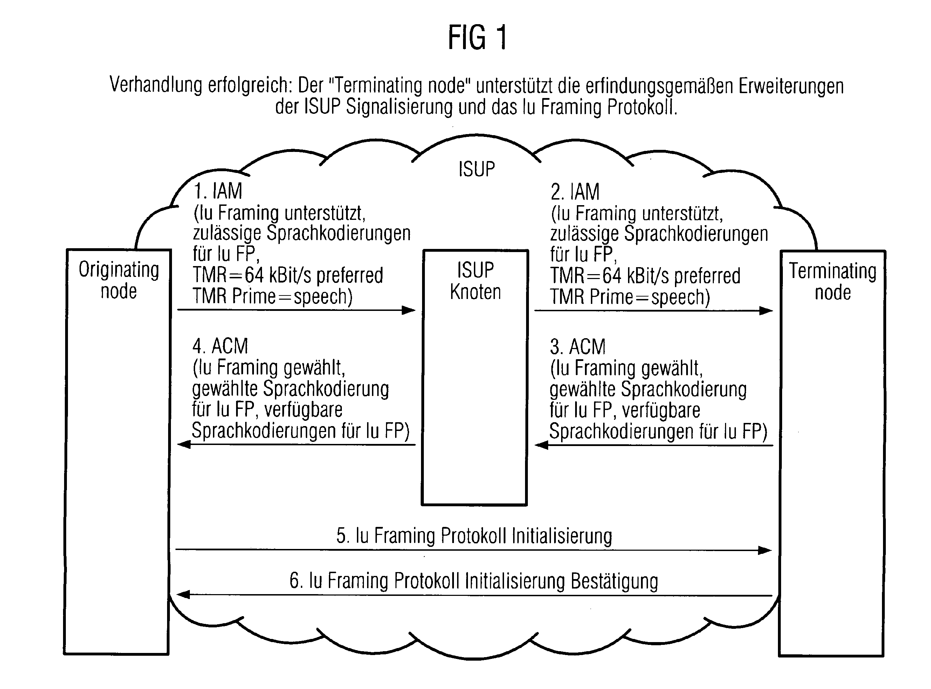

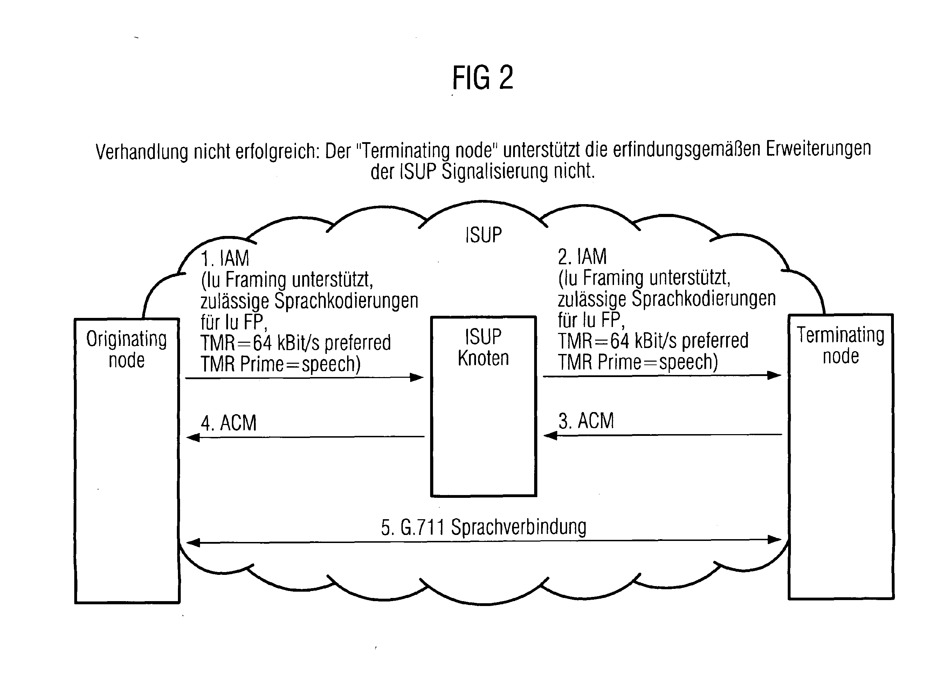

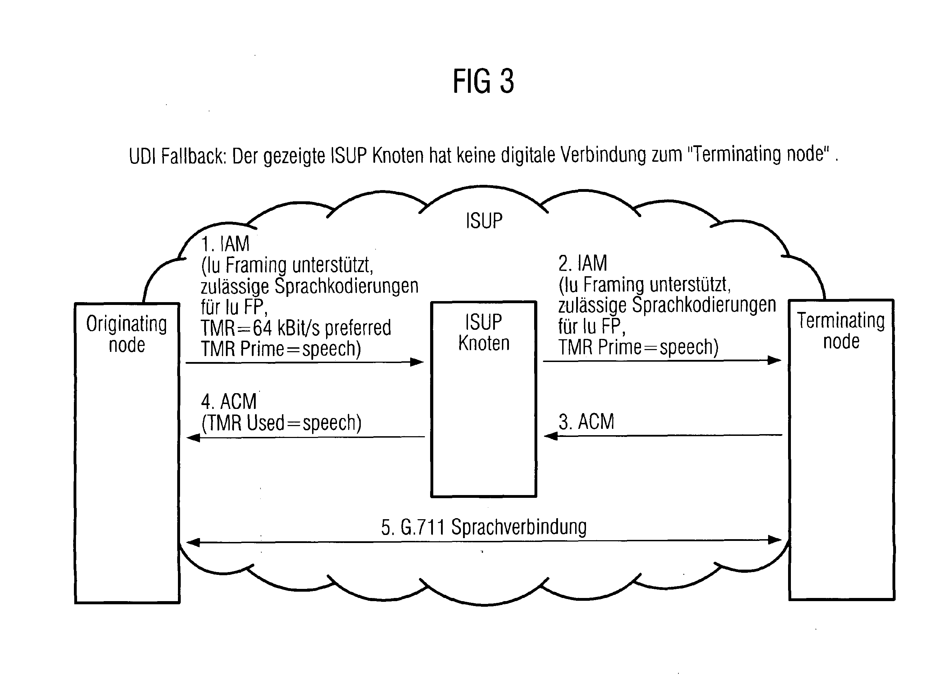

Im ersteren Fall (Fig. 1) enthält die vom beantwortenden Netzknoten ausgehende ISUP ACM-Antwort-Nachricht die verfahrensgemäß vorgesehenen Parameter, während dies beim zweiten und dritten Szenario (Fig. 2 bzw. 3) nicht der Fall ist und zwischen auslösendem und beantwortendem Knoten eine G.711-Sprachverbindung etabliert wird.

Die Ausführung der Erfindung ist nicht auf dieses Beispiel und die oben hervorgehobenen Aspekte beschränkt, sondern schließt auch Modifikationen und Merkmalskombinationen ein, die sich aufgrund der hier gegebenen Gesamtdarstellung im Rahmen fachgemäßen Handelns finden lassen.

## Patentansprüche

1. Verfahren zur Nutzdatenübertragung, insbesondere Sprachübertragung, zwischen mindestens zwei Mobilfunknetzen oder zwei Bereichen eines Mobilfunknetzes vom 3GPP-Typ, insbesondere UMTS-Typ, wobei im Mobilvermittlungsnetz das Iu Framing Protokoll genutzt wird und ein erstes Netz oder ein erster Bereich optimierte Sprachcodecs und Codecverhandlung zum Beispiel im Rahmen des BICC-Signalisierungsprotokolls nutzt, und ein zweites Netz oder ein zweiter Bereich des ISUP-Signalisierungsprotökoll nutzt,
**dadurch gekennzeichnet, dass**
dedizierte Parameter eingesetzt werden, die eine Verhandlung der netz- bzw. bereichsübergreifenden Unterstützung des Iu Framing Protokolls und/oder der Art der Sprachkodierung zwischen Vermittlungseinrichtungen an der Grenze des zweiten Netzes oder Bereiches ermöglichen, und
dass eine solche Verhandlung im Rahmen der ISUP-Signalisierung durchgeführt wird.

2. Verfahren nach Anspruch 1,
**dadurch gekennzeichnet, dass**
zur Verhandlung der Unterstützung des Iu Framing Protokolls von einem auslösenden Netzknoten an einen beantwortenden Netzknoten ein Parameter "Iu Framing unterstützt" gesandt und durch den beantwortenden Knoten nur im Falle einer Unterstützung des Iu Framing Protokolls sowie der Verhandlung in einer Antwort-Nachricht ein Parameter "Iu Framing gewählt" zurückgesandt wird.

3. Verfahren nach Anspruch 2,
**dadurch gekennzeichnet, dass**
der auslösende Netzknoten bei Empfang einer Antwort-Nachricht mit dem Parameter "Iu Framing gewählt" das Iu UP Framing Protokoll durch das zweite Netz oder den zweiten Bereich hindurch verwendet und in Richtung des zweiten Netzes oder zweiten Bereiches eine Initialisierung des Iu Framing Protokolls triggert, während er bei Empfang einer Antwort-Nachricht, die den Parameter "Iu Framing gewählt" nicht enthält, das Iu UP Framing Protokoll durch das zweite Netz oder den zweiten Bereich hindurch nicht verwendet.

4. Verfahren nach Anspruch 2 oder 3,
**dadurch gekennzeichnet, dass**
der auslösende Netzknoten bei Empfang einer Antwort-Nachricht, die den Parameter "Iu Framing gewählt" nicht enthält, bei einer Sprachverbindung eine Transkodierung durchführt.

5. Verfahren nach einem der Ansprüche 2 bis 4,
**dadurch gekennzeichnet, dass**
im Falle einer Sprachübertragung vom auslösenden Netzknoten ein Parameter "zulässige Sprachkodierungen für Iu Framing Protokoll" an den beantwortenden Netzknoten gesandt und von diesem im Falle einer Unterstützung des Iu Framing Protokolls sowie der Verhandlung aus den in diesen Parameter aufgeführten Sprachkodierungen eine Kodierung ausgewählt und diese in einer Antwort-Nachricht in einem Parameter "gewählte Sprachkodierung für Iu Framing Protokoll" an den auslösenden Netzknoten gesandt wird.

6. Verfahren nach Anspruch 5,
**dadurch gekennzeichnet, dass**
der beantwortende Netzknoten in der Antwort-Nachricht an den auslösenden Netzknoten in einem weiteren Parameter "verfügbare Sprachkodierungen für Iu Framing Protokoll" weitere aus der Menge der durch den auslösenden Knoten vorgeschlagenen Kodierungen ausgewählte Kodierungen übermittelt.

7. Verfahren nach Anspruch 5 oder 6,
**dadurch gekennzeichnet, dass**
zur Auswahl einer Kodierung und wahlweise Angabe weiterer verfügbarer Kodierungen der beantwortende Netzknoten eine Codecverhandlung auf der Seite des ersten Netzes oder Bereiches durchführt.

8. Verfahren nach einem der Ansprüche 2 bis 7,
**dadurch gekennzeichnet, dass**
der beantwortende Netzknoten im Falle einer Nichtunterstützung des Iu Framing Protokolls oder der Verhandlung die Parameter "Iu Framing unterstützt" bzw. "zulässige Sprachkodierungen für Iu Framing Protokoll" verwirft, den Verbindungsaufbau jedoch fortführt.

9. Verfahren nach einem der Ansprüche 2 bis 9,
**dadurch gekennzeichnet, dass**
die Parameter "Iu Framing unterstützt" und "zulässige Sprachkodierungen für Iu Framing Protokoll" in der ISUP IAM-Nachricht und die Parameter "Iu Framing gewählt" und "gewählte Sprachkodierung für Iu Framing Protokoll" und wahlweise "verfügbare Sprachkodierungen für Iu Framing Protokoll" in der ISUP ACM-Nachricht transportiert werden.

10. Verfahren nach einem der vorangehenden Ansprüche,
**dadurch gekennzeichnet, dass**
die dedizierten Parameter von Netzknoten innerhalb des zweiten Netzes oder Bereiches transparent durchgereicht werden, wozu die mit diesen Parametern verbundene Kompatibilitätsinformation in der ISUP-Signalisierung geeignet gesetzt wird.

11. Verfahren nach einem der vorangehenden Ansprüche,
**gekennzeichnet durch**
eine Kombination mit der ISUP UDI Fallback Prozedur.

12. Verfahren nach einem der vorangehenden Ansprüche,
**gekennzeichnet durch**
die Realisierung in einer der folgenden Netzkonfigurationen:
- 3GPP BICC Mobilfunknetz - ISUP PSTN - 3GPP BICC Mobilfunknetz
- 3GPP BICC Mobilfunknetz - ISUP PSTN - 3GPP ISUP Mobilfunknetz
- 3GPP ISUP Mobilfunknetz - ISUP PSTN - 3GPP ISUP Mobilfunknetz
- 3GPP ISUP Mobilfunknetz - 3GPP BICC Mobilfunknetz
- 3GPP ISUP Mobilfunknetz - 3GPP ISUP Mobilfunknetz
- ISUP Bereich in 3GPP Mobilfunknetz -BICC Bereich 3GPP Mobilfunknetz
- BICC Bereich 3GPP Mobilfunknetz - ISUP Bereich in 3GPP Mobilfunknetz - BICC Bereich 3GPP Mobilfunknetz
- 3GPP ISUP Mobilfunknetz.
